# EUROPEAN PATENT APPLICATION

(11) **EP 2 950 263 A1**
(43) Date of publication of application: **02.12.2015**
(21) Application number: 14743233.0
(22) Date of filing: 23.01.2014
(51) Int. Cl.: G06Q 50/00, G06F 21/62

(54) **METHOD FOR MANAGING PRIVACY AND SECURITY IN A SOCIAL NETWORK, BY CHECKING SHARED DATA AND RELATIONSHIPS BETWEEN USERS**

(30) Priority: 23.01.2013 ES 201330072
(71) Applicant: Spotlinker, SL, 28850 Torrejón de Ardoz (Madrid) (ES); Garcia Manchado, Nilo, 28850 Torrejon De Ardoz (ES)
(72) Inventor: GARCÍA MANCHADO, Nilo, E-28850 Torrejón de Ardoz (Madrid) (ES)
(74) Representative: Sahuquillo Huerta, Jesús
(86) International application number: PCT/ES2014/070045
(87) International publication number: WO 2014/114837

(57) **Abstract**

The invention relates to a computer-implemented method for managing privacy and security in a social network, by checking shared data and relationships with other users, said method comprising the use of a privacy identifier in multimedia files in order to ensure checking on the part of the sending user and an expectation identifier in order to check relationships with other users within a social network.

## Description

The object of the present invention is a system and a communication device as well as the method for the operation thereof that allows a more secure and personalized communication between users of a communications network, improving its usability and the user experience in said communications network.

### Background of the invention

Currently the use of communication networks, both mobile and fixed, is widespread for the exchange of personal information, and more specifically, in the so-called social networks. In this type of systems, within a server a user profile is defined, so that all users registered on such server have the ability to establish some kind of virtual relationship among them, prior consent of said relationship by both users.

Thus, for example, in a social network such as Facebook® such consent is based on the issuance of a request for friendship by a first user with respect to a second user, who has the authority to accept or reject the request. Once the request is accepted, both users have access to the information of the other, being only limited by the privacy policies established by both users on the service and do not have to match. Therefore, information shared by a user with a high degree of privacy, with a user with a low degree of privacy could be compromised on the network.

In the present invention, the shared information and shared data are taken as synonyms, including said data or information, private information, images, videos or any other data or information shared by a user with their contacts in a social network.

To a person skilled in the art, the usability of these systems is directly related to the security and privacy thereof. In the discussion of the present invention, the privacy and security of information shared on social networks and more broadly in the communication networks, through services and search engines, they are intimately related, constituting in itself a technical problem faced by the service companies, given the huge amount of data they handle.

Increased security and privacy in a social network is related to two factors, which are two technical problems that have to be resolved independently or in parallel to increase the privacy and security in social networks, which would obviously result in an optimization of the hardware needed to handle the same. These factors are the amount of data managed by each user and ownership of the information shared by each user.

### Amount of data managed by each user

The data managed by each user are directly related to the number of contacts added that manages each user in a social network. It is evident that due to the large amount of data, the policies or privacy tools provided by the service are more difficult to properly structure and, therefore, it is also very difficult to structure the relationships with other users and communication of particular expectations for each participating user.

In social networks, it is quite common for users to have a significant amount of contacts (more than five hundred contacts is regarded as a figure that involves an amount of data difficult to manage by a single user) of which an important part are not really that, establishing in these social networks a phenomenon similar to SPAM, with individuals who, without any relationship with others send multiple requests for friendship waiting the access in good faith of any of the users to which the request has been submitted for a malicious use of the shared data. This point is particularly sensitive in the case of use of social networks by minor children, where the privacy and security takes on a predominant position over any other consideration.

However, the social network services such as Facebook® and the like, use their ability to identify users as contacts and, therefore, acquaintances within a social network to avoid SPAM and authorize other types of services, such as credit ratings, as described in the document ES 2 388 832 T3.

Therefore, it is clear the problem of security and privacy that may occur for a user who, in good faith, admits a significant number of users as contacts with which the relationship is uncertain or is not secured or confirmed.

The service Google Circles® currently offers a solution consisting of organizing the relations of a user based on its interest groups, in such a way that these groups receive certain information each of them. This system is described, for example, in documents WO2012061318 and WO2012177730. In addition, a certain hierarchy is proposed, where family-type relationships, for example, would be at the top. This system facilitates the way in which information is sent to the users of our environment, and without any doubt is an effective way of data organization, but it does not solve the problems associated with privacy, as indicated previously, since it only discriminates the information that must be shared in each group.

Nor is there a system for relationship correspondences or a common system of social relation cataloging, in such a way that each one of persons can correspond or not to that particular cataloguing. The management of expectations of social relations is not resolved in such a way that, when creating a new social relationship the guest or one person who receives the proposal of relationship or friendship has no attached an expectation from the other user, which implies creating a contact without any specific purpose and without any real knowledge about its relationship with the other person.

### Ownership of information shared by a user

Generally, the social network of the type Facebook®, Twitter®, Linkedin® or the like, the users are identified through one or several images. In the present invention, image means any media file, such as a digital photograph, a video, an animation, or any other type of file that visually identifies a user.

In general, and in accordance with the privacy policies of the companies that manage these networks, the images shared by a user on said network automatically came to be owned by mentioned companies that host these data on their servers. Therefore, the user who has shared these images lacks a real control over them. In addition, all these images are images that can be considered as *fixed,* i.e., they are always a single image (or a sequence of images) that serve to identify the user who has established that image as representative, but which in any case takes into account what, who or whom, are seeing it. In addition, most of the users of these networks do not apply correctly the privacy policies of the companies or these are insufficient, essentially for two reasons:
a) Because the user shows private images to other users who do not enjoy their confidence or are not actual recipients of such image sharing.
b) Because the user shows an excess of zeal in the use of privacy policies, limiting its profile in such a way that it can not exploit all the potential offered by the social network.

These problems have led to specialization and proliferation of social networks, as well as insecurity in their use. For example, there are networks focus on friendship, such as Facebook® and other more focused to the world of work and professional relationships, Linkedin®, for example. It is clear that, in both cases, the images to be showed are, or must be, very different.

However, in practice, and if privacy policies are not used properly both worlds can be "mixed", committing to the user who has shared the images. At this point, it should be taken into account that there are search engines that scan the network looking for user images which often are found in the network, but which do not coincide with what the user protagonist of the image wants to show.

With the proliferation of smart mobile devices, the problem has multiplied since the list of contacts tend to identify user images on the network (by links with social networks, for example) and which do not coincide with what the user wants to show, at least at certain moments and/or contacts.

It is therefore necessary to any means that allows selecting which image or video is associated with a particular user profile as a function of the image's observer.

### Description of the invention

The technical problem that solves the present invention is the increase of the privacy and safety in use in a social network. As established above, the increase in the privacy and safety in use in a social network is based on two factors, which in turn are constituted by two technical problems to be solved for the resolution of the main technical problem:
i. establishing a structure of data managed by a user.
ii. establishing by the user what information is shared according to each receiver user.

In a first aspect of the invention, the computer-implemented method for managing privacy and security in a social network, by checking shared data and relationships with other users; where in the control of the shared data, said data consist of at least one multimedia file and comprising
assigning to a particular multimedia file a privacy identifier;
assigning to at least a contact of the social network user a privacy identifier;
sharing the file with the identifier in the social network;
and where only if the privacy identifier of the contact matches the multimedia file, the multimedia file is shown to the contact; and where every time the user which has shared the file changes the privacy identifier of the shared multimedia file, the matching of said new priority identifier with at least one of the user's contacts is analyzed, being showed in the case of matching.

In a second aspect of the invention, the computer-implemented method for managing privacy and security in a social network, by checking shared data and relationships between users; where in the control of the relationships between users comprises the steps of
establishing an expectation identifier of relationship with at least one user of the social network;
sending a contact request from a first user of the social network to a second user of the social network, where said request includes a first expectation identifier from said first user;
receiving a response from said second user to said first user including a second expectation identifier from second user;
where if the first and second expectation identifiers coincide, a contact between said first and second user is established.

In a third aspect, the invention describes the method that combines the two methods described above. As stated, the solution to the general technical problem is the sum of resolution of two particular, but interrelated technical problems. Obviously, by solving one of them, the technical problem is solved, but by solving both, the solution to the technical problem is optimal.

Finally, in other aspects of the invention, the portable electronic device and computer program product capable of performing the methods described are claimed.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### Brief description of the figures

Described very briefly hereinafter are a series of drawings that help to better understand the invention and which are expressly related to an embodiment of said invention that is presented as a non-limiting example thereof.
Figure 1 shows a diagram of the portable electronic device that implements the present invention.
Figure 2 shows a diagram showing relationships between individuals belonging to a particular social network.
Figure 3 shows a block diagram of a system to provide relation information of a social network to an existing database.
Figure 4 shows a representation of the social network of Figure 2 in tree format.

### Preferred embodiment of the invention

In general, the present invention runs on architecture of a communication network that includes one or more communication servers and a plurality of user's portable electronic devices 100. The network is used to connect the servers to portable electronic devices 100.

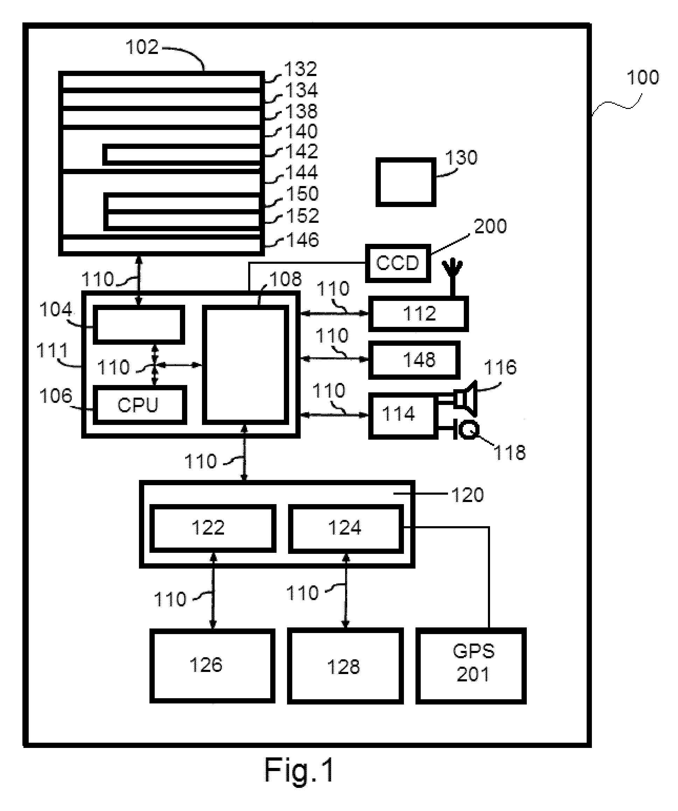

Said portable electronic devices 100 may be any selected from computers, tablets, mobile phones, although a preferred architecture is shown in Figure 1. In general, any programmable communication device can be configured as a device for the present invention.

Figure 1 illustrates a portable electronic device, according to some embodiments of the invention. The portable electronic device 100 of the invention includes a memory 102, a memory controller 104, one or more processing units 106 (CPU's), a peripherals interface 108, RF circuitry 112, audio circuitry 114, a speaker 116, a microphone 118, an input/output (I/O) subsystem 120, a screen 126, other input or control elements 128, and an external port 148. These components communicate over the one or more communication buses 110. The device 100 can be any portable electronic device, including but not limited to a handheld computer, a tablet computer, a mobile phone, a media player, a personal digital assistant (PDA), or the like, including a combination of two or more of these items. It should be appreciated that the portable electronic device 100 is only one example of a portable electronic device 100, and that the device 100 may have more or fewer components than shown, or a different configuration of components. The various components shown in Figure 1 may be implemented in hardware, software or a combination of both hardware and software, including one or more signal processing and/or application specific integrated circuits. In the same way, the screen is defined as touch-sensitive, although the invention can also be deployed in devices with a standard screen.

The memory 102 may include high speed random access memory and may also include non-volatile memory, such as one or more magnetic disk storage devices, flash memory devices, or other non-volatile solid state memory devices. In some embodiments, the memory 102 may further include storage remotely located from the one or more processors 106, for instance network attached storage accessed via the RF circuitry 112 or external port 148 and a communications network (not shown) such as the Internet, intranet(s), Local Area Networks (LANs), Wide Local Area Networks (WLANs), Storage Area Networks (SANs) and the like, or any suitable combination thereof. Access to the memory 102 by other components of the device 100, such as the CPU 106 and the peripherals interface 108, may be controlled by the memory controller 104.

The peripherals interface 108 couples the input and output peripherals of the device to the CPU 106 and the memory 102. The one or more processors 106 run various software programs and/or sets of instructions stored in the memory 102 to perform various functions for the device 100 and to process data.

In some embodiments, the peripherals interface 108, the CPU 106, and the memory controller 104 may be implemented on a single chip, such as one chip 111. In some other embodiments, they may be implemented on separate chips.

The RF (radio frequency) circuitry 112 receives and sends electromagnetic waves. The RF circuitry 112 converts electrical signals to/from electromagnetic waves and communicates with communications networks and other communications devices via the electromagnetic waves. The RF circuitry 112 may include well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. The RF circuitry 112 may communicate with the networks, such as the Internet, also referred to as the World Wide Web (WWW), an Intranet and/or a wireless network, such as a cellular telephone network, a wireless local area network (LAN) and/or a metropolitan area network (MAN), and other devices by wireless communication. The wireless communication may use any of a plurality of communications standards, protocols and technologies, including but not limited to Global System for Mobile Communications (GSM), Enhanced Data GSM Environment (EDGE), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for email, instant messaging, and/or Short Message Service (SMS), or any other suitable communication protocol, including communication protocols not yet developed as of the filing date of this document.

The audio circuitry 114, the speaker 116, and the microphone 118 provide an audio interface between a user and the device 100. The audio circuitry 114 receives audio data from the peripherals interface 108, converts the audio data to an electrical signal, and transmits the electrical signal to the speaker 116. The speaker converts the electrical signal to human-audible sound waves. The audio circuitry 114 also receives electrical signals converted by the microphone 116 from sound waves. The audio circuitry 114 converts the electrical signal to audio data and transmits the audio data to the peripherals interface 108 for processing. Audio data may be may be retrieved from and/or transmitted to the memory 102 and/or the RF circuitry 112 by the peripherals interface 108. In some embodiments, the audio circuitry 114 also includes a headset jack. The headset jack provides an interface between the audio circuitry 114 and removable audio input/output peripherals, such as output-only headphones or a headset with both output (headphone for one or both ears) and input (microphone).

The I/O (input/output) subsystem 120 provides the interface between input/output peripherals on the device 100, such as the touch screen 126 and other input/control devices 128, and the peripherals interface 108. The I/O subsystem 120 includes a touch-screen controller 122 and one or more input controllers 124 for other input or control devices. The one or more input controllers 124 receive/send electrical signals from/to other input or control devices 128. The other input/control devices 128 may include physical buttons (e.g., push buttons, rocker buttons, etc.), dials, slider switches, and/or geographic location means 201 such as GPS or the like.

The touch screen 126 in this practical embodiment provides both an output interface and an input interface between the device and a user. The touch-screen controller 122 receives/sends electrical signals from/to the touch screen. The touch screen 126 displays visual output to the user. The visual output may include text, graphics, video, and any combination thereof. Some or all of the visual output may correspond to user-interface objects, further details of which are described below.

The touch screen 126 also accepts input from the user based on haptic and/or tactile contact. The touch screen 126 forms a touch-sensitive surface that accepts user input. The touch screen 126 and the touch screen controller 122 (along with any associated modules and/or sets of instructions in the memory 102) detects contact (and any movement or break of the contact) on the touch screen 126 and converts the detected contact into interaction with user-interface objects, such as one or more soft keys, that are displayed on the touch screen. In an exemplary embodiment, a point of contact between the touch screen 126 and the user corresponds to one or more digits of the user. The touch screen 126 may use LCD (liquid crystal display) technology, or LPD (light emitting polymer display) technology, although other display technologies may be used in other embodiments. The touch screen 126 and touch screen controller 122 may detect contact and any movement or break thereof using any of a plurality of touch sensitivity technologies, including but not limited to capacitive, resistive, infrared, and surface acoustic wave technologies, as well as other proximity sensor arrays or other elements for determining one or more points of contact with the touch screen 126.

The device 100 also includes a power system 130 for powering the various components. The power system 130 may include a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

In some embodiments, the software components include an operating system 132, a communication module, or set of instructions, 134, a contact/motion module, or set of instructions, 138, a graphics module, or set of instructions, 140, a user interface state module, or set of instructions, 144, and one or more applications, or set of instructions, 146.

The operating system 132 (e.g., Darwin, RTXC, LINUX, UNIX, OS X, WINDOWS, or an embedded operating system) includes various software components and/or drivers for controlling and managing general system tasks (e.g., memory management, storage device control, power management, etc.) and facilitates communication between various hardware and software components.

The communication module 134 facilitates communication with other devices over one or more external ports 148 and also includes various software components for handling data received by the RF circuitry 112 and/or the external port 148. The external port 148 (e.g., Universal Serial Bus (USB), FIREWIRE, etc.) is adapted for coupling directly to other devices or indirectly over a network (e.g., the Internet, wireless LAN, etc).

The contact/motion module 138 may detect contact with the touch screen 126 in conjunction with the touch screen controller 122. The contact/motion module 138 includes various software components for performing various operations related to detection of contact with the touch screen 126, such as determining if contact has occurred, determining if there is movement of the contact and tracking the movement across the touch screen, and determining if the contact has been interrupted (that is, if the contact has ceased). Determining movement of the point of contact, which is represented by a series of contact data, may include determining speed (magnitude), velocity (magnitude and direction), and/or an acceleration (including a change in magnitude and/or direction) of the point of contact. In some embodiments, the contact/motion module 126 and the touch screen controller 122 also detect contact on a touchpad.

The graphics module 140 includes various known software components for rendering and displaying graphics on the touch screen. Note that the term "graphics" includes any object that can be displayed to a user, including without limitation text, web pages, icons (such as user-interface objects including soft keys), digital images, videos, animations and the like.

In some embodiments, the graphics module 140 includes an optical intensity module 142. The optical intensity module 142 controls the optical intensity of graphical objects, such as user-interface objects, displayed on the touch screen 126. Controlling the optical intensity may include increasing or decreasing the optical intensity of a graphical object. In some embodiments, the increase or decrease may follow predefined functions.

The user interface state module 144 controls the user interface state of the device 100. The user interface state module 144 may include a lock module 150 and an unlock module 152. The lock module detects satisfaction of any of one or more conditions to transition the device 100 to a user-interface lock state and to transition the device 100 to the lock state. The unlock module detects satisfaction of any of one or more conditions to transition the device to a user-interface unlock state and to transition the device to the unlock state.

The one or more applications 130 can include any applications installed on the device 100, including without limitation, a browser, address book, contact list, email, instant messaging, word processing, keyboard emulation, widgets, JAVA-enabled applications, encryption, digital rights management, voice recognition, voice replication, location determination capability (such as that provided by the global positioning system (GPS)), a music player (which plays back recorded music stored in one or more files, such as MP3 or AAC files), etc.

In some embodiments, the device 100 may include one or more optional optical sensors (not shown), such as CMOS or CCD image sensors 200, for use in imaging applications.

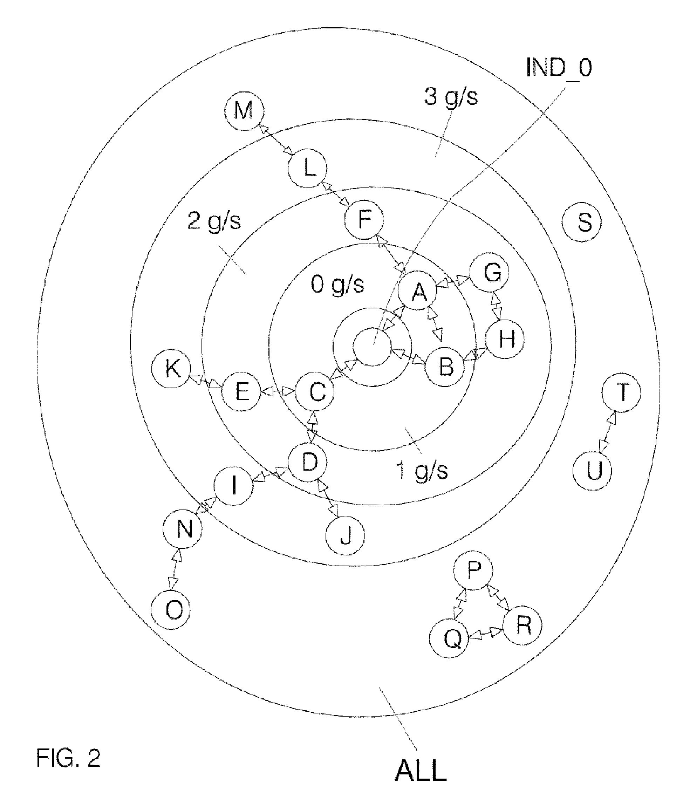

On the other hand, as shown in Figure 2, a social network is defined, in general, by the relations between groups of individuals and may include relationships that may range from casual acquaintances to intimate family ties. Figure 2 represents the social network as a graph where each node corresponds to a particular member or individual of a certain social network, such as FACEBOOK®. Thus, according to this representation, the connection between two nodes represents the relationship between two individuals. In addition, the degree of separation between any two nodes is defined as the minimum number of jumps required for crossing the graph from a node to another. The number of degrees of separation between two members is a measure of the lack of a relationship between two individuals.

Figure 2 shows a graphical representation of a social network focused on a particular individual (IND_0). Other members of this social network include individuals 1 to 21 (A-U) whose position with respect to the first individual IND_0 is indicated by the degree of separation between them. Thus, the friends of the first individual IND_0 include A, B and C which are separated from IND_0 by a single degree of separation (1 g/s).

A friend of a friend of the first individual IND_0 is separated from said first individual by two degrees of separation (2 g/s). Thus, as shown in Figure 2, each of the individuals D, E, F, G and H are separated 2 g/s from the first individual IND_0. Consequently, a friend of a friend of a friend is separated three degrees of separation (3 g/s). In Figure 2, the degrees of separation of more than three degrees are listed under the heading "ALL".

The degrees of separation in a social network are defined with respect to a particular individual. Thus, in a social network every individual will have its own set of relations of first, second and third grade. As it is obvious to a person skilled in the art, the social network of an individual can be extended to include nodes to a degree of separation N. By increasing the number of degrees beyond three, however, the number of nodes is growing in a typical way at an explosive rate and begins to quickly reflect the set ALL.

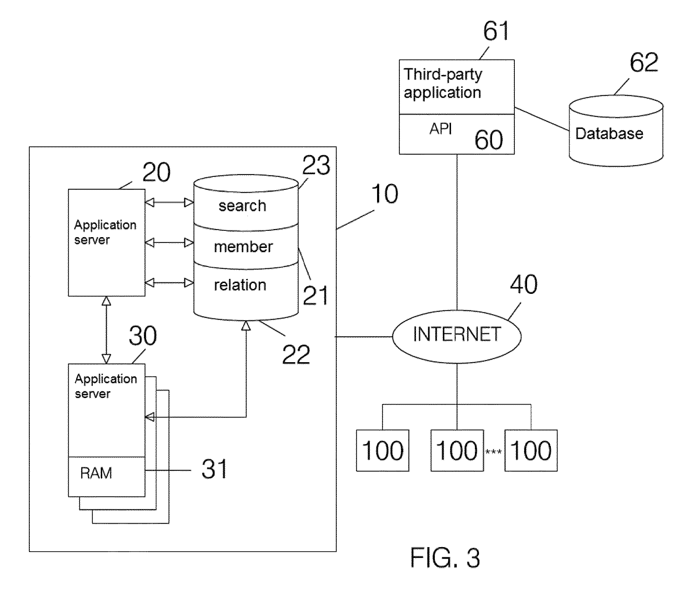

Figure 3 shows a block diagram of an example of a system that allows creating and managing a social network online. As shown, Figure 3 shows a system 10 that includes an application server 20 and graphics servers 30. The system computers 10 are connected by a broadband network 40, for example Internet, and are accessible through the network by a plurality of users through the portable electronic device 100 in a particular embodiment, although logically it is possible the access by a personal computer. The application server 20 manages a member database for the network 21, a relationships database 22 and a searching database 23.

The member database 21 contains profile information for each member in the social network managed by the system 10 online. The profile information may include, among other: a unique member identifier, name, age, sex, location, population, references to image files, lists of interests, attributes and the like. Profile information also includes contact and visibility settings. The relationship database 22 stores information that defines relationships to first grade among members. The relationship database 22 stores information concerning relations of first grade among members. In addition, the contents of the member database is indexed and optimized for searching and stored in the searching database 23. The member database 21, the relationship database 22 and the searching database are updated to reflect entries of information about new members and editions of information from existing members are carried out through the devices 100 or a personal computer.

The application server 20 also manages requests for information exchange that receives from devices 100 or remote computers. The graphics servers 30 receive a request from the application server 20, process the request and return the results of the request to the application server 20.

Graphics servers 30 store a graphic representation of the social network defined by all of the members (nodes) and their corresponding relationships. Graphics servers 30 reply requests from the application server 20 to identify relationships and the degree of separation between members in the social network online. The application server 20 is configured, in addition, to process application requests for a third party 61 to provide information on line about the social network, for example, the relationship between individuals, for user records kept in a database of a third party 62. The application of the third party 61 makes requests to the application server 20 through an application programming interface (API) 60.

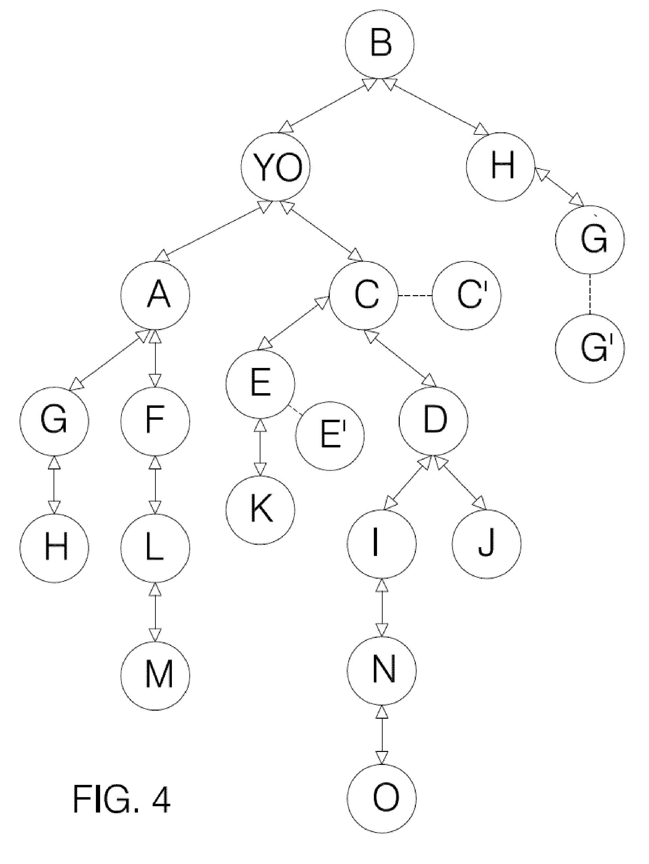

Figure 4 is a representation of a social network according to Figure 2 in tree format, starting with the member B on top and showing all members connected to B in the social network of Figure 1. G and H have been shown twice because each of them is connected to B through two different routes. Each of C', E' and G' collectively represent individuals who are identified in contact lists maintained by members C, E and G respectively. These individuals are not, in typical fashion, while the social network of Figure 2. Other members also maintain contact lists, but for the purposes of simplicity, it is assumed that only C, E and G have data stored in their contact lists. The contact list information includes name, address, phone numbers, email addresses and similar information that are stored in a contact management software, such as MS Outlook® and the like.

The present invention is shown by two aspects for optimization of the management of a social network: (a) through the control of information shared by a user, i.e., control of the spread of information by nodes; and (b) through the control of relations between nodes, establishing a control of the expectations of each node to other nodes.

### Control of information shared by a user

As stated, a technical problem is the lack of control of information shared by a user, i.e., no control over the spread of the image through the nodes shown in Figure 4. The application server 20 and graphics server 30 literally share the image(s) assigned for a particular user profile with contacts (adjacent nodes). However, and referring to Figure 4, when a user A shares or establishes a communication with the user F, user G and user L are able to know what user A has shared with the user F. This information also includes the profile image assigned to the user A.

As indicated, the spread within a social network responds to exponential criteria, and from the second degree of separation between nodes, the loss of control is absolute. In the same way, and as stated, the nodes may have assigned contact lists managed by contact management software, such as MS Outlook® and the like, that can assign automatically a certain image to a contact.

In order to solve technically this problem, each image of a user has inserted an identifier that allows the application server 20 to distribute the image to a preselected group of nodes, blocking the display of that image to a non-authorized node for this purpose, either by denial (no image), or replacement for a generic image.

Thus, the user A that shares a media file (usually a private image of the same) sets a privacy identifier for said image which has necessarily coincide with the privacy identifier incorporated by the user in the media file. In this way, it is obtained a total control of the image which the user projects into its contacts or potential contacts, since by simply changing the privacy identifier (or assigning several or none) the file displayed to different users will change. Thus, in practice the user profile image(s) are adapted to each situation and each time, ensuring the user to the maximum its own image within a social network.

Thus, the user may have defined a generic image when the profile visitor is anonymous or identifiable, but even in that case, the displayed image can be customized, since through the visitor's browsing data it may be possible to know the origin (IP ranges) and language, and show an image(s) for that specific data.

Thus, the management of files (usually profile images) is a matter of the user who has shared the file. Thanks to the privacy identifier and returning to the example of Figure 4, the image projected by the user towards C and C' will change simply by modifying the image identifier. I.e. the application server 20 will require the matching between the request's privacy identifier and the file and if not identical it will show an image that matches or an image defined as public or for all users, or directly, if required by the user, blocking the display of no image.

It is also possible that the image is related to a date or specific time (temporary restriction), so the privacy identifier would not only be associated with one or several contacts, but also with a date and time, thus establishing expiration for the shared image. It is obvious to a person skilled in the art that the privacy identifier could be exclusively a date and time, thus showing a certain image for all the users in that time range.

The privacy identifier can be associated with a positional restriction or only understand this positional restriction, the files being shared with contact(s) within a particular geographical position that can be defined, as a non-limitative example, by the GPS means 201 of a user's portable electronic device 100.

The privacy identifiers can be shared between contacts, i.e. between contacts A and F, for example in Figure 4, both users knew what contact identification has established each of them on the other, thus being more flexible the communication and more accurate user identification.

Finally, the contact(s) can request the user that shares a change of identifier to adapt the shared file.

### Control of relations between nodes

In order to check the relationships between nodes, i.e. between the users, the social network implements a method where a first user establishes an expectation or expectation identifier regarding a relationship that he/she wants to maintain with another user of the social network, whether or not already contact of the same.

That expectation identifier is sent to another user, for example "working meeting in London" and if that expectation coincide with that of the user who has received it, then a contact is established between both users in the social network.

In the example in Figure 4, if the node A sends an expectation to the node E, node E will respond it with the expectation expected from A, and if both are coincidental, then both nodes will have a single degree of separation, i.e. they will be contacts among themselves.

The expectation identifier allows us to know in advance if it is convenient or not a particular proposal, streamlining the relationships and allowing materializing them more effectively. For example, anyone can doubt whether invite a client to a business meal, however if client enables the business meal expectation with this particular contact, he/she can invite him/her with certainty greater than without a expectation management.

The same will happen with a sales visit or with an expectation for maintaining a meeting by phone, the system user enables regarding that contact one or several relationship expectations and the system alerts to the receiver of such expectations. This process is quite different from the current one of sending directly an invitation, since the invitation is sent by the active part of the relationship and only has three options, accept it, ignore it or reject it.

In the former case both users can fill their expectation, or not, and the other can check actively or through the system what expectation has one over the other, without rejecting or accepting the invitation and modifying the expectation regarding the other user until they match, being able at that moment to enable any kind of invitation.

Another feature of the system is the ability to classify the relationships based on common and well known standards. There are various matching systems that ask the user different interests and qualify how much coincidence there is between them, allowing defining some common tastes, this applies to contact systems that allow knowing beforehand if there is a closeness in how the people in a group are. For example, if person "x" likes the mountain and to the person "y" too, this defines a coincidence that allows greater chances among strangers that common grounds exist.

In the work environment there are the so-called 360 ° analyses, where people of an organization through a series of questionnaires analyze the adequacy of a particular worker through the analysis of the different contacts with which it has a relationship.

However, human relations are of various kinds or natures and mostly they will evolve with time. There is no cataloguing system or access to it that allows the system's users know what is the cataloging status of a user of the same and the correspondence of the same, so that each user can qualify what type of relationship has with a person at that time, for example one may be a family member of other and have a relationship of deep friendship and the other may or may not reciprocal.

This is especially suited for relationships with acquaintances, since by placing it in a place on the agenda, with a category defined by the system it is easy to develop an evolution from a superficial relationship to a much deeper relationship, creating, every x time the landmark of change in status and the confirmation of the same from the other part.

This may allow sharing information depending on the status of the person, for example if I have a relationship of friendship shared in first grade, I can share the phone number, if it is a lesser degree only the mail, at a far superior degree, I could share the physical location. This degree of correspondence allows users sharing information and/or services with other users in a more secure way.

If we add to this the control of data that are shared as indicated, it is achieved a social network completely secure and with a degree of privacy much greater than current systems.

Finally, one of the advantages that can be derived from using the invention is the possibility of using personal images instead of icons or "emoticons" as those of the Japanese company emoji® in the talks. In general, the written communication suffers from many limitations in the transmission of emotions in an easily and quickly manner in which we share emotions in spoken conversations.

To resolve this issue, it is common to use emoticons, which are icons that simulate an emotion. The problem is that these emoticons are very similar and are little personal, in some chat rooms it is possible to customize smileys so they are a little more personal, but often the emotion that you want to transmit is not well identified. Other existing problem is the difficulty of typing on mobile phones and tablets an extensive text of a message, being necessary elements that facilitate communication with fewer typing.

To resolve this issue, the invention proposes the use of own images in such a way that these images or small videos can be inserted into any conversation in order to convey an emotion or opinion regarding a message or a part of the message. To do this, the user records their own images or things that considers they reflect an emotion and insert them through quick links for example, by typing ":" and then ")" it could directly access one or several images that mean smile so that with a single instruction such emoimage is inserted automatically and conversely if the user types ":" and then "(", the image or set of images that represent disgust or well-being will appear.

Another of the problems that exist in this type of content consists of activating the movement of file for example audio, for example an emoimage that replaces a farewell, and contains audio, if we activate the audio when the user opens the message, the recipient would listen to audio at the same time he is reading the message thus activating the farewell at the beginning of the reading. In this sense, a solution would be to show an image of the file indicating something of the content and when the user either moves the cursor on top of the emoimage or tactually put the finger in a place near the emoimage in such a way that the audio or video is activated.

Image or video could also include on its side a typical smiley, with the aim of clarifying the expression if it is not sufficiently clear.

This type of images or videos that can be added to a message can also replace all kinds of common contents, e.g. the greeting or e.g. the farewell, so in the physical document can be added a reaction so that said reaction is attached to the document history.

This allows documents to have an attitude and real comment record.

It is common that there are multiple comments on the issue in a legal document.

Within a text these comments may also appear with video, with an icon or with the mixture thereof that can be specific about the text or standardized messages, of the type, I do not agree with or I disagree.

These emoimage can replace the typical images that identify someone in a social network, for example twitter is based on an image in the person's profile which identifies him/her, well, when replacing this image by an emoimage the user can send more information about its emotional state, for example, regarding a tweet or short information message in a social network, provided that the privacy and security are guaranteed as described in the present invention.

## Claims

1. Computer-implemented method for managing privacy and security in a social network, by checking shared data and relationships with other users; where in the control of the shared data, said data consist of at least one multimedia file and comprising:
assigning to a particular multimedia file a privacy identifier;
assigning to at least a contact of the social network user a privacy identifier;
sharing the file with the identifier in the social network;
**characterized in that**
only if the privacy identifier of the contact matches the multimedia file the multimedia file is shown to the contact; and where every time the user which has shared the file changes the privacy identifier of the shared multimedia file, the matching of said new priority identifier with at least one of the user's contacts is analyzed, being showed in the case of matching.

2. Method according to claim 1 where in the case of not matching the file and user privacy identifiers, a file without priority identifier is showed.

3. Method according to any of claims 1 and 2 where the privacy identifier comprises a temporary restriction.

4. Method according to any of the preceding claims where the privacy identifier comprises a position restriction.

5. Method according to any of the preceding claims where the privacy identifier comprises a range of IP addresses and/or a plurality of Web browsing data.

6. Method according to any of the preceding claims where the privacy identifiers are shared between contacts.

7. Method according to any of the preceding claims where each contact can ask other user a change in the privacy identifier.

8. Computer-implemented method for managing privacy and security in a social network, by checking shared data and relationships between users; where in the control of the relationships between users comprises the steps of
establishing an expectation identifier of relationship with at least one user of the social network;
sending a contact request from a first user of the social network to a second user of the social network, where said request includes a first expectation identifier from said first user;
receiving a response from said second user to said first user including a second expectation identifier from second user.

9. Computer-implemented method for managing privacy and security in a social network by checking shared data and relationships between users **characterized in that** comprises the steps of the method of any of claims 1 to 7 and the steps of the method of claim 8.

10. Portable electronic device comprising
a data display screen;
at least a camera;
geolocation means;
one or more processors;
a memory; and
**characterized in that** one or more programs in which the program(s) is(are) stored on memory and configured to run through, at least, the processors, the programs including instructions to execute the method of any of claims 1 to 7 and/or the method of claim 8.

11. Software product with instructions set up for execution by one or more processors that, when they are executed by a portable electronic device as that of claim 10 make that said device to carry out the procedure according to the method of any of claims 1 to 7 and/or the method of claim 8.

12. Communications system comprising
a server that may work to maintain a network structure that defines relations between individuals in a social network, in which the graph structure comprises a plurality of nodes, wherein each node corresponds to an individual in a social network, and wherein a degree of separation between any two nodes is a minimum number of jumps required to move around the graph from one node to another and is **characterized in that** it comprises means for executing the method of any of claims 1 to 7 and/or the method of claim 8.
